(19) Europäisches Patentamt

**European Patent Office**

Office européen des brevets

(11) Veröffentlichungsnummer: **0 109 611**
**B1**

(12) **EUROPÄISCHE PATENTSCHRIFT**

(45) Veröffentlichungstag der Patentschrift:
**22.06.88**

(21) Anmeldenummer: **83111179.4**

(22) Anmeldetag: **09.11.83**

(51) Int. Cl.⁴: **A 22 C 13/00**, B 32 B 23/14,
C 09 D 3/00

(54) Schlauchförmige Nahrungsmittelhülle, insbesondere Wursthülle, mit verbesserter Abschälbarkeit.

(30) Priorität: **18.11.82 DE 3242655**
**24.05.83 DE 3318804**

(43) Veröffentlichungstag der Anmeldung:
**30.05.84 Patentblatt 84/22**

(45) Bekanntmachung des Hinweises auf die Patenterteilung:
**22.06.88 Patentblatt 88/25**

(84) Benannte Vertragsstaaten:
**AT BE CH DE FR GB IT LI LU NL SE**

(56) Entgegenhaltungen:
**CH - A - 303 515**
**DE - A - 2 546 681**
**US - A - 3 898 348**

(73) Patentinhaber: **HOECHST AKTIENGESELLSCHAFT,
Postfach 80 03 20, D-6230 Frankfurt am Main 80 (DE)**

(72) Erfinder: **Hammer, Kiaus-Dieter, Dr., An der
Hasenquelle 25, D-6500 Mainz 1 (DE)**
Erfinder: **Winter, Hermann, Am Schlosspark 93,
D-6200 Wiesbaden (DE)**
Erfinder: **Kindl, Erwin, Dr., Weinfeldstrasse 17,
D-6200 Wiesbaden (DE)**
Erfinder: **Luchterhand, Heinz, Dr., Am Schlosspark 93,
D-6200 Wiesbaden (DE)**

## Beschreibung

Die Erfindung bezieht sich auf eine schlauchförmige Nahrungsmittelhülle, insbesondere Wursthülle, auf Basis von Cellulose von der im Oberbegriff des Anspruchs 1 genannten Art, auf ein Verfahren von der im Oberbegriff des Anspruchs 16 genannten Art und die Verwendung der Nahrungsmittelhülle.

Eine Hülle dieser Art ist bereits aus der GB-A-723 323 bekannt. Nach dieser Druckschrift werden Wursthäute aus regenerierter Cellulose zur Verbesserung ihrer Ablöseeigenschaften gegenüber Wurstmasse mit besonders starker Haftung (Blutwurst) mit einem inneren Überzug versehen, der aus einer wasserlöslichen filmbildenden Trägersubstanz (Stärke- und Cellulosealkyläther) und einem hochmolekularen aliphatischen Kohlenwasserstoff (Paraffinwachs, natürliche Fette oder Öle) besteht. Nachteilig an dieser bekannten älteren Beschichtungsemulsion ist, dass die damit beschichteten Hüllen beim Raffvorgang leicht beschädigt werden oder sich überhaupt nicht raffen lassen. Ferner zeigen sie den Nachteil, dass sie dazu neigen, an dem Raffdorn, auf dem sie zusammengestaucht werden, haften zu bleiben. Als weiterer Nachteil dieser Innenbeschichtung ist die schwierige Handhabung von Hartparaffin beim Auftrag auf die Innenseite der Wursthülle zu nennen. Um es zu verflüssigen, muss es vor dem Auftragen zunächst auf Temperaturen von 60 bis 70 °C erhitzt werden. Es wird dann heiss aufgetragen, wobei Gefahr besteht, dass das Hüllenmaterial zu stark austrocknet und versprödet. Auch werden die Stärke- und Celluloseäther nicht als Trennmittel, sondern nur als Trägersubstanz und in relativ geringer Menge verwendet.

Zur Verbesserung der Abziehbarkeit von kleinkalibrigen Wursthüllen auf Cellulosebasis wurden in jüngerer Zeit Innenbeschichtungen aus wasserlöslichen Stärkeäthern und Triglyceriden (US-A-4 248 900), Celluloseäthern mit kationischen Harzen (US-A-4 161 968) bzw. mit Rizinus-, Mineraloder Siliconöl (US-A-3 898 348) beschrieben.

Diese bekannten Wursthüllen gehören jedoch zur Kategorie der «kleinen Nahrungsmittelhüllen», die bekanntlich ein Kaliber von 18 bis 26 mm zeigen und zur Herstellung und Formgebung von hautlosen Wurstprodukten kleiner Grösse wie Wiener Würstchen verwendet werden. Diese Hüllen bestehen gewöhnlich aus einem nicht faserverstärktem, relativ dünnwandigem Celluloseschlauch. Sie werden auch als «Schäldarm» bezeichnet, da diese Hüllen nach dem Stopfen mit kollagenreicher Wurstmasse und anschliessendem Ausbilden einer Eigenhaut, die aus koaguliertem Proteinmaterial der Wurstmasse besteht, von dieser Eigenhaut der Wurst abgeschält werden. Diese neueren Innenbeschichtungen dienen deshalb dazu, bei der Herstellung von Würsten, die ohne Hüllen in den Verkehr kommen, das maschinell durchgeführte Entfernen der Hülle von der Eigenhaut der Wurst zu erleichtern, wobei die gegenseitige Haftung verringert werden soll.

Bei der Herstellung von geräucherten zylinderförmigen Würsten mit mittlerem oder grossem Kaliber, d.h. zwischen 35 und 50 bzw. 50 bis 160 mm, und geräucherten gekrümmten oder ringförmigen Würsten werden rauchdurchlässige Wursthüllen aus Cellulose mit entsprechend grösserem Durchmesser und mit einer Faserverstärkung oder gekrümmte oder ringförmige rauchdurchlässige Wursthüllen aus Cellulose, sog. Kranzdärme, verwendet. Kranzdärme zeigen gewöhnlich ein Kaliber im Bereich von 35 bis 55 mm. Zum Stopfen dieser Wursthüllen werden Wurstrezepturen verwendet, die sich in ihrer Zusammensetzung im Vergleich zu den für Schäldarm vorgesehenen Wurstrezepturen völlig unterscheiden, woraus sich auch ganz andere Haftungskräfte zwischen Hülle und Wurstmasse ergeben.

Bei diesen mittel- oder grosskalibrigen, gekrümmten oder ringförmigen Würsten, wie grober Mettwurst, Fleischwurst oder Blutwurst, besteht eine wesentlich stärkere Haftung zwischen Wurstmasse und Wursthülle. Die bekannten inneren Überzüge für Schäldarm können diese Haftungskräfte nicht ausreichend verringern. Wird eine mit einem dieser Überzüge auf der Innenseite versehene Wursthülle mit Brät von z.B. grober Mettwurst, Fleischwurst oder Blutwurst gefüllt, so lässt sich, wegen der unzureichenden Trennwirkung gegenüber diesen Typen von Wurstbrät, die Wursthülle nur schwer und unter häufigem Abreissen von der Wurstmasse abziehen. Eine wesentliche Verbesserung der Schälbarkeit der Hülle gegenüber einer unbeschichteten ist kaum feststellbar.

Es ist deshalb Aufgabe der Erfindung, ausgehend von einer Nahrungsmittelhülle der eingangs genannten Art, eine für mittel- oder grosskalibrige Wursthüllen und Kranzdärme besonders geeignete Innenbeschichtung zu finden, die die relativ hohe Haftung zwischen diesen Wursthüllen und den für diese Hüllentypen vorgesehenen Wurstmassen weitgehend herabsetzt und eine höhere Trennwirkung zeigt, so dass sich die Wursthülle ohne grossen Kraftaufwand abziehen lässt und die Gefahr von Abrissen der Wursthülle beim Abschälen weitgehend ausgeschlossen ist. Neben der stärkeren Trennwirkung soll die Innenbeschichtung eine unverändert gute Gleitmittel- und Weichmacherwirkung zeigen. Ausser diesen Vorteilen soll die Innenbeschichtung eine weitere wichtige Eigenschaft zeigen, nämlich keine versprödende Wirkung auf das Hüllenmaterial auszuüben. Eine solche Nahrungsmittelhülle würde sich problemlos raffen und zu gefüllten Produkten verarbeiten lassen.

Diese Aufgabe wird gelöst durch die im Anspruch 1 angegebene Nahrungsmittelhülle, durch das Verfahren mit den im Anspruch 16 genannten Merkmalen und durch die Verwendung nach den Ansprüchen 23 und 24. Die Unteransprüche geben bevorzugte Ausführungsformen der Hülle bzw. des Verfahrens an.

Die Nahrungsmittelhülle der Erfindung mit dem speziellen Überzug auf der Innenseite zeigt verringerte Haftung zwischen der Innenwand der Hülle und dem für mittel- und grosskalibrige Hüllen und Kranzdarm typischen Füllgut, insbesondere wenn das Füllgut ein Wurstbrät ist für Blutwurstsorten, wie Rotwurst, Thüringer, Sülzwurst, roter Presssack oder Presskopf, für Brühwürste wie Jagdwurst, Bierschinken, Fleischwurst, Mortadella, Gelbwurst oder Lyoner, oder für Rohwurst wie Mettwurst, wobei letztere insbesondere in gekrümmten oder ringförmigen Hüllen aus Cellulose ohne Faserverstärkung hergestellt wird.

Die Nahrungsmittelhülle besteht aus einem Trägerschlauch auf Basis von Cellulose und der zur Verbesserung der Abschälbarkeit der Hülle vom Füllgut vorgesehenen Beschichtung auf ihrer Innenwand.

Das Basismaterial für den Trägerschlauch ist Cellulose (Zellglas, regenerierte Cellulose, Cellulosehydrat) und wird auf übliche Weise als nahtloser Schlauch durch Koagulation und Regenerieren vorzugsweise aus Viskoselösung hergestellt. Es ist auch möglich, Schläuche mit einer Klebenaht zu verwenden, die durch Falten einer Bahn und Verbinden der Ränder hergestellt werden (EP-A-0 050 702, EP-A-0 058 240). Für die besonders vorteilhafte Verwendung der Hülle zur Herstellung von Würsten vom Blutwurst- oder Brühwurst-Typ verwendet man einen Trägerschlauch aus Cellulose mit einer Faserverstärkung, die beispielsweise in Form einer Papierbahn in der Wandung des Trägerschlauchs eingebettet ist. Zur Herstellung von gekrümmten oder ringförmigen Würsten, wie Rohwürste, insbesondere grobe Mettwürste, verwendet man Trägerschläuche in gekrümmter oder in abgerundeter Ringform, sogenannte Kranzdärme, welche keine Faserverstärkung aufweisen. Die Krümmung wird beispielsweise durch einseitige Verdehnung des Schlauches bei seiner Herstellung erzeugt, es sind aber auch andere Verfahren bekannt (US-A-2 136 566, US-A-2 925 621, US-A-3 679 435, EP-A-0 050 702).

Eine weitere Beschichtung auf der Innenseite der Hülle, ausser dem Überzug der Erfindung, ist nicht vorgesehen. Sofern ein Überzug auf der Aussenseite der Hülle vorhanden sein soll, darf er die Rauchdurchlässigkeit der Hülle nicht wesentlich verringern.

Die Nahrungsmittelhülle kann als flachgelegter Schlauch, aufgewickelt auf eine Rolle in Form von einseitig verschlossenen Hüllenabschnitten zum Füllen mit Füllgut eingesetzt werden. Es lassen sich auch geraffte Schlauchhüllen, sog. Raupen, herstellen, wobei man übliche Raffvorrichtungen (US-A-3 988 804) einsetzt. Hierbei hat sich gezeigt, dass mit der Innenbeschichtung nicht nur eine verbesserte Trennwirkung zwischen Füllgut und Hülleninnenwand erzielt wird, sondern dass sich noch zusätzliche Vorteile beim Aufwickeln, Lagern, Raffen und Verarbeiten ergeben. So sorgt die Innenbeschichtung dafür, dass die auf einer Rolle aufgewickelten Schläuche nicht haften oder verkleben. Auch Hüllenabschnitte verkleben bei der Lagerung nicht und lassen sich vor dem Befüllen problemlos öffnen. Ferner sind die Schläuche besonders gleitfähig und weich und lassen sich deshalb problemlos raffen.

Der Überzug umfasst als erste Komponente einen wasserlöslichen Cellulose- und/oder Stärkeäther. Typische geeignete Cellulose- bzw. Stärkeäther sind: Carboxymethylcellulose und Carboxymethylstärke sowie deren Natriumsalze, Alkyläther wie Methyl- oder Äthylcellulose, Methyl- oder Äthylstärke, Hydroxyalkyläther, wie Hydroxyäthyl- oder Hydroxypropylcellulose, Hydroxyäthyl- oder Hydroxypropylstärke, Alkylhydroxyalkyläther wie Methyl- bzw. Äthylhydroxyäthylcellulose oder Methyl- bzw. Äthylhydroxypropylcellulose, und die entsprechenden Stärkeäther, Alkylcarboxymethyläther, Hydroxyalkylcarboxymethyläther und Alkylhydroxyalkylcarboxymethyläther. Unter «wasserlöslich» ist auch «alkalilöslich» zu verstehen.

Besonders bevorzugt sind niedermolekulare Typen von Cellulose- bzw. Stärkeäthern, die beispielsweise unter der Bezeichnung ®Tylose C 10, C 20, C 30, H 10, H 20, H 30, MH 10, MH 20 und MH 30 im Handel sind und auch in relativ hohen Konzentrationen noch niederviskose wässrige Lösungen liefern. Hierbei bedeutet der Buchstabe C Carboxymethylcellulose, der Buchstabe H Hydroxyäthylcellulose und die Buchstaben MH Methylhydroxyäthylcellulose. Die Ziffern 10, 20 und 30 geben die mittlere Viskosität der Celluloseäther in der Dimension $mPa \cdot s$ an, gemessen nach Höppler in einer 2 gew.-%igen wässrigen Lösung bei 20 °C. Die aufgetragene Menge an Celluloseäther bzw. Stärkeäther liegt bei 0,05 bis 1, vorzugsweise 0,1 bis 0,5 mg/m² Schlauchfläche.

Das als zweite Komponente im Überzug auf der Innenseite der Nahrungsmittelhülle verwendete Wachs ist beispielsweise ein pflanzliches Wachs wie Candelilla-, Carnauba- oder Montanwachs, ein tierisches Wachs wie Bienenwachs, ein Mineralwachs wie Polyolefinwachs, welches aus n- und iso-Paraffinen besteht, oder ein synthetisches Wachs, z.B. auf Basis von Oxazolin.

Als besonders geeignet haben sich jedoch Wachse mit funktionellen Gruppen gezeigt, deren Hauptbestandteil aus einem Gemisch von Estern linearer aliphatischer Alkohole mit linearen höheren Fettsäuren besteht, wobei die Kettenlängen der Fettsäuren vorzugsweise zwischen 18 und 34 C-Atomen liegen. Die Alkoholkomponente ist überwiegend ein einwertiger Alkohol; mehrwertige Alkohole mit freien OH-Gruppen sind nur in geringem Masse vorhanden. Zu den linearen höheren Fettsäuren zählen auch langkettige Hydroxycarbonsäuren und Dicarbonsäuren. Ein solches Wachs ist insbesondere Candelilla-, Carnauba-, Bienen- und Montanwachs.

Ein besonders geeignetes Wachs mit funktionellen Gruppen ist chemisch verändertes Montanwachs, das beispielsweise als sog. «Säurewachs» oder «Esterwachs» im Handel ist. Chemisch verändertes Montanwachs wird erhalten durch Oxidation von rohem und entharztem Montanwachs, z.B. mit Chromschwefelsäure. Bei diesem Bleichvorgang werden die schwarzbraunen Harz- und Asphaltstoffe im Wachs abgebaut und entfernt. Die Wachsalkohol-Ester werden gespalten, die freiwerdenden Wachsalkohole zu Wachssäuren sowie vorhandene Hydroxysäuren und Diole zu Dicarbonsäuren oxidiert. In geringem Masse werden auch die Wachsester hydrolytisch gespalten und in Wachssäuren umgewandelt. Alle diese Säuregruppen dieses sog. «Säurewachses» werden dann zur Herstellung von «Esterwachs» mit ein- oder mehrwertigen Alkoholen verestert, beispielsweise mit Äthylenglykol und 1,3-Butylenglykol (1:1) (KPS-Typ, Herst. Hoechst). Nach der Erfindung kann das chemisch veränderte Montanwachs als «Säurewachs» oder als «Esterwachs» verwendet werden. Das ursprüngliche Wachsgerüst aus langkettigen, aliphatischen Verbindungen bleibt im chemisch veränderten Montanwachs weitgehend erhalten.

Wachse mit funktionellen Gruppen, insbesondere chemisch verändertes Montanwachs, zeigen eine besonders hohe Verbesserung der Schälbarkeit der Nahrungsmittelhülle aus Cellulose. Die verbesserte Wirkung könnte darauf zurückzuführen sein, dass sich die Estereinheiten mit ihren funktionellen Gruppen eventuell an die Celluloseketten anlagern, wobei es zur Bildung von Wasserstoffbrücken zwischen den funktionellen Gruppen der Estereinheiten und der Cellulose kommen kann.

Der Anteil der Wachskomponente ist in der Überzugsmasse und im Überzug im Vergleich mit der Menge an Cellulose- und Stärkeäther gering, wobei dieser Anteil sogar kleiner sein kann als die Hälfte der Menge an Cellulose- und Stärkeäther und im kleinsten Fall nur $^1/_{20}$ betragen kann.

In weiterer Ausführungsform umfasst der Überzug auf der Innenseite der Nahrungsmittelhülle eine dritte Komponente, bestehend aus Siliconöl, pflanzlichem Öl oder einem Gemisch aus Siliconöl und pflanzlichem Öl.

Das Siliconöl ist im Gegensatz zu anderen Vorschlägen (US-A-3 307 956, US-A-3 558 331) nicht mehr reaktiv, polymerisiert nicht mehr, härtet nicht mehr aus und reagiert auch nicht auf irgendeine andere Weise. Es ist vor allem ein Dialkylpolysiloxan, insbesondere ein Dimethylpolysiloxan, wobei mittelviskose Typen bevorzugt sind. Unter mittelviskosen Typen sind Siliconöle zu verstehen, die in 40 gew.-%iger wässriger Emulsion die gleiche Viskosität zeigen wie die beispielsweise unter der Bezeichnung Siliconöl-Emulsion E 2, E 10 und E 115 (Herst. Wacker-Chemie) im Handel befindlichen Produkte.

Besonders bevorzugte pflanzliche Öle sind Leinöl, Olivenöl, Sonnenblumenöl, Rüböl, Palmöl und Kokosöl. Unter pflanzlichem Öl sind auch insbesondere synthetisch hergestellte Triglyceridgemische pflanzlicher Fettsäuren zu verstehen, wie sie unter der Bezeichnung ®Miglyol oder ®Softenol (Herst. Dynamit Nobel) im Handel sind. Geeignete Triglyceridgemische enthalten veresterte gesättigte Fettsäuren mit einer Kettenlänge von 4 bis 12, vorzugsweise 5 bis 10 Kohlenstoffatomen. Unter pflanzlichem Öl ist nach der Erfindung auch eine Abmischung genannter Öle zu verstehen.

Sofern ein Gemisch aus Siliconöl und pflanzlichem Öl verwendet wird, ist das Mengenverhältnis zweckmässigerweise so zu wählen, dass das pflanzliche Öl etwa in gleicher Menge oder sogar im Überschuss vorhanden ist, wobei es bis zur dreifachen Menge gegenüber Siliconöl vorhanden sein kann. Nur ist zu beachten, dass bei sehr geringem Anteil an Siliconöl der Wachsanteil erhöht werden muss.

Wenn die dritte Komponente aus Siliconöl oder aus pflanzlichem Öl besteht, beträgt die Menge an Siliconöl oder pflanzlichem Öl in der Überzugsmasse und im Überzug gewöhnlich jeweils 15 bis 60%, bezogen auf die Gewichtsmenge der ersten Komponente; die Menge an Siliconöl beträgt das 1,5- bis 5-fache und die Menge an pflanzlichem Öl das 0,5- bis 0,9-fache des Gewichtsanteils an zweiter Komponente.

Sofern diese dritte Komponente aus einem Gemisch von Siliconöl und pflanzlichem Öl besteht, ist der Mengenanteil an pflanzlichem Öl zweckmässigerweise grösser und beträgt dann von 15 bis 80%, bezogen auf die Gewichtsmenge der ersten Komponente, und das 1,5- bis 10-fache, bezogen auf die Gewichtsmenge der zweiten Komponente. Die Menge an Siliconöl bleibt im Gemisch in dem obengenannten Bereich.

Das Verfahren der Erfindung geht aus von einem üblichen Verfahren zur Herstellung von Nahrungsmittelhüllen, insbesondere Wursthüllen, auf Basis von Cellulose, die sich vom Füllgut, insbesondere von der Wurstmasse, leicht abschälen lassen.

Der Auftrag der Innenbeschichtung auf die Innenseite der Schlauchhülle erfolgt in üblicher Weise, beispielsweise durch Einfüllen einer Beschichtungsflüssigkeit in die Schlauchhülle (GB-A-1 201 830, US-A-2 901 358, DE-A-2 801 038, DE-C-3 012 250) oder durch Aufsprühen der Beschichtungsflüssigkeit in die Schlauchhülle während des Raffprozesses, z.B. durch den hohlen Raffdorn (US-A-3 451 827). Die Auftragstemperatur ist gewöhnlich gleich der Umgebungstemperatur, d.h. sie liegt bei etwa 15 bis 30 °C.

Das Einfüllen der Beschichtungsflüssigkeit in die Schlauchhülle erfolgt zweckmässigerweise bereits bei der Herstellung der Schlauchhülle, z.B. nach der Fällung des Cellulosehydrat-Gels aus Viskose und vor der Trocknung.

Die zum Auftrag auf die Innenseite der Nahrungsmittelhülle vorgesehene wässrige Überzugsmischung enthält je Liter etwa 10 bis 200, insbesondere 30 bis 60 g wasserlöslichen Celluloseäther und/oder Stärkeäther, weiterhin dispergiertes Wachs als zweite Komponente sowie gegebenenfalls das Siliconöl und/oder pflanzliches Öl in den oben angegebenen Mengenverhältnissen. Bei der Herstellung der Beschichtungsflüssigkeit wird das Wachs gewöhnlich in 15 bis 40 gew.-%iger wässriger Dispersion und die dritte Komponente in 25 bis 60 gew.-%iger wässriger Emulsion zur wässrigen Lösung von Cellulose- bzw. Stärkeäther zugegeben. Ausserdem kann die Beschichtungsflüssigkeit übliche Mengen an Weichmacher wie Glycerin oder Propylenglykol enthalten. Die Komponenten werden kräftig gemischt, beispielsweise durch starkes Rühren, so dass eine weitgehend stabile wässrige Mischung entsteht.

Die Zusammensetzung der Beschichtungsflüssigkeit, d.h. die Mengenverhältnisse der einzelnen Komponenten, ist dem jeweiligen Hüllentyp und dem vorgesehenen Füllgut anzupassen. So ist für die Innenbeschichtung von Kranzdärmen aus nicht faserverstärkter Cellulose, die zur Herstellung von Würsten vom Rohwursttyp, insbesondere von Mettwurst, bestimmt sind, eine wässrige Lösung vorgesehen, die je Liter Lösung als erste Komponente etwa 20 bis 65 g von niedermolekularem Cellulose- oder Stärkeäther, insbesondere niedermolekularer Hydroxyäthylcellulose (z.B. ®Tylose H 10), als zweite Komponente etwa 3 bis 30 g chemisch verändertes Montanwachs (z.B. Typ KPS) und als dritte Komponente etwa 10 bis 45 g nicht reaktives Siliconöl auf Basis von Dimethylpolysiloxan (z.B. Typ E 2) und/oder 10 bis 50 g synthetisches Triglycerid mit veresterten $C_5$- bis $C_{10}$-Fettsäuren (z.B. ®Softenol) enthält. In dieser Lösung ist die Gewichtsmenge an Wachs, Siliconöl und Triglycerid jeweils kleiner als die Gewichtsmenge an erster Komponente.

Sofern die dritte Komponente aus Siliconöl oder aus einem Gemisch von Siliconöl und Triglycerid besteht, ist ihre jeweilige Gewichtsmenge grösser als die Gewichtsmenge an Wachs. In diesen beiden Fällen ist es besonders vorteilhaft, wenn die Gewichtsmenge an Siliconöl das 1,5- bis 5-fache der Gewichtsmenge an Wachs und die Gewichtsmenge an Triglycerid das 1,5- bis 10-fache der Wachsmenge beträgt.

Besteht die dritte Komponente allerdings nur aus dem Triglycerid, dann ist für Wursthüllen für Würste vom Rohwursttyp ein Wachsanteil in der Innenbeschichtung erforderlich, der gewichtsmässig grösser ist als der Triglycerid-Anteil und vorzugsweise den Triglycerid-Anteil, bezogen auf das Gewicht dieser dritten Komponente, um 10 bis 100% übersteigt. Bezogen auf das Gewicht der ersten Komponente beträgt dann der Wachsanteil 30 bis 70%.

Die genannte bevorzugte Innenbeschichtung des für Rohwurst vorgesehenen Kranzdarms enthält dann, jeweils bezogen auf die Menge an Celluloseäther bzw. Stärkeäther, 5 bis 60 Gew.-%

Wachs und etwa 17 bis 120 Gew.-% dritter Komponente, wobei die Mengenverhältnisse im Überzug etwa den Mengenverhältnissen in der Beschichtungsflüssigkeit entsprechen. Es ist selbstverständlich, dass die Innenbeschichtung – ausser den Hauptkomponenten – den aus der Emulsion der dritten Komponente stammenden Emulgator enthält.

Die Erfindung wird durch das folgende Beispiel näher erläutert, bei dem neun verschieden beschichtete Kranzdärme hergestellt werden.

Die in dem Beispiel verwendeten wässrigen Beschichtungsflüssigkeiten werden jeweils hergestellt durch Lösen von Hydroxyäthylcellulose (®Tylose H 10, Herst. Hoechst) in Wasser, Versetzen der erhaltenen Lösung unter kräftigem Rühren mit einer 20 gew.-%igen Dispersion von chemisch verändertem Montanwachs (Typ KPS, Herst. Hoechst) und gegebenenfalls einer 40 gew.-%igen Emulsion auf Basis von Dimethylpolysiloxan (Typ E 2, Herst. Wacker-Chemie) und/oder einer 50 gew.-%igen Emulsion auf Basis von pflanzlichem Öl (Triglycerid auf Basis von gesättigten $C_5$- bis $C_{10}$-Fettsäuren, ®Softenol-Spezialöl (Herst. Dynamit Nobel). Weiterhin wird von Glycerin und Wasser hinzugefügt, so dass die Beschichtungsflüssigkeit etwa 10 Vol.-% Glycerin enthält. Die miteinander zu vermischenden Mengen der drei genannten Hauptkomponenten für 1 Liter Beschichtungsflüssigkeit sind in der Tabelle zusammengestellt.

Es wird jeweils ein Kranzdarm mit einem Kaliber von 43 mm aus nicht faserverstärktem Cellulosehydrat hergestellt. Hierzu wird Viskose auf übliche Weise zu einem Schlauch koaguliert und in Cellulosehydrat-Gel übergeführt, wobei der Schlauch durch spezielle Streckverfahren auf übliche Weise die typische gekrümmte Form eines Kranzdarms erhält. Noch vor dem Trocknen des gekrümmten Schlauchs aus Cellulosehydrat-Gel werden etwa 1,5 l der jeweiligen Beschichtungsflüssigkeit in den Schlauch eingefüllt und, wie in der GB-A-1 201 830 beschrieben, beschichtet und getrocknet. Die Trocknertemperatur beträgt etwa 80 bis 150 C, die Verweildauer im Trockner 2 bis 6 Minuten. Nach dem Verlassen des Trockners wird der innenbeschichtete Schlauch auf einen Feuchtigkeitsgehalt von 7 bis 12 Gew.-% angefeuchtet und aufgewickelt.

Tabelle

| Kranzdarm | 1 | 2 | 3 | 4 | 5 | 6 | 7 | 8 | 9 |
|---|---|---|---|---|---|---|---|---|---|
| Celluloseäther (g) | 50 | 50 | 50 | 40 | 50 | 50 | 50 | 50 | 50 |
| gelöst in Wasser (ml) | 650 | 500 | 500 | 500 | 760 | 730 | 705 | 720 | 695 |
| Siliconöl-Emulsion (ml) | – | 37,5 | 37,5 | 50 | 37,5 | 37,5 | 37,5 | – | – |
| Trockengehalt (g) | – | 15 | 15 | 20 | 15 | 15 | 15 | – | – |
| Triglycerid-Emulsion (ml) | – | – | – | – | 30 | 60 | 80 | 30 | 30 |
| Trockengehalt (g) | – | – | – | – | 15 | 30 | 40 | 15 | 15 |
| Wachsdispersion (ml) | 100 | 25 | 75 | 50 | 25 | 25 | 25 | 100 | 125 |
| Feststoffgehalt (g) | 20 | 5 | 15 | 10 | 5 | 5 | 5 | 20 | 25 |

In einen Abschnitt von 40 cm Länge wird Wurstbrät von Art der groben Mettwurst gefüllt. Nach dem Räuchern der Wurst lässt sich die Hülle ohne Haftung am Wurstbrät und ohne Abrisse von der Wurst abziehen. Hierbei zeigen die Wursthüllen Nr. 2 bis 7 optimale Eigenschaften, während die Wursthülle Nr. 1 geringfügig stärker am Wurstbrät haftet. Die Wursthüllen Nr. 8 und 9 liegen bezüglich ihrer Haftungseigenschaften zwischen der Wursthülle Nr. 1 und den Wursthüllen Nr. 2 bis 7.

**Patentansprüche**

1. Schlauchförmige Nahrungsmittelhülle, insbesondere Wursthülle, auf Basis von Cellulose mit einem auf ihrer inneren Oberfläche vorhandenen Überzug zur Verbesserung der Abschälbarkeit der Hülle vom Füllgut, insbesondere von der Wurstmasse, umfassend eine homogene Mischung aus wenigstens zwei Komponenten, wobei die erste Komponente aus einem wasserlöslichen Celluloseäther und/oder Stärkeäther und die zweite Komponente aus einem Wachs besteht, dadurch gekennzeichnet, dass im Überzug die Gewichtsmenge der zweiten Komponente kleiner ist als die Hälfte der Gewichtsmenge an erster Komponente.

2. Hülle nach Anspruch 1, dadurch gekennzeichnet, dass die zweite Komponente ein Wachs mit funktionellen Gruppen umfasst, dessen Hauptbestandteil aus einem Gemisch von Estern linearer aliphatischer Alkohole mit linearen höheren Fettsäuren besteht, wobei die Kettenlängen der Fettsäuren vorzugsweise zwischen 18 und 34 C-Atomen liegen.

3. Hülle nach Anspruch 2, dadurch gekennzeichnet, dass die zweite Komponente ausgewählt ist aus der Gruppe der Wachse auf Basis von Montanwachs, Candelillawachs, Carnaubawachs oder Bienenwachs.

4. Hülle nach Anspruch 2 oder 3, dadurch gekennzeichnet, dass die zweite Komponente chemisch verändertes Montanwachs umfasst.

5. Hülle nach einem der Ansprüche 1 bis 4, dadurch gekennzeichnet, dass das Gewichtsverhältnis erster zu zweiter Komponente im Überzug grösser als 2 zu 1 und bis zu 20 zu 1 beträgt.

6. Hülle nach einem der Ansprüche 1 bis 4, dadurch gekennzeichnet, dass der Überzug zusätzlich eine dritte Komponente enthält, umfassend nicht reaktives Siliconöl, dessen Gewichtsmenge im Überzug kleiner ist als die Gewichtsmenge an erster Komponente und gleich oder grösser ist als die Gewichtsmenge an zweiter Komponente.

7. Hülle nach Anspruch 6, dadurch gekennzeichnet, dass der Gewichtsanteil an Siliconöl 15 bis 60%, bezogen auf die Gewichtsmenge an erster Komponente, und bis zum 5-fachen des Gewichtsanteils an zweiter Komponente beträgt.

8. Hülle nach einem der Ansprüche 1 bis 4, dadurch gekennzeichnet, dass der Überzug zusätzlich eine dritte Komponente enthält, umfassend ein pflanzliches Öl, dessen Gewichtsmenge kleiner ist als die jeweilige Gewichtsmenge an erster und zweiter Komponente.

9. Hülle nach Anspruch 8, dadurch gekennzeichnet, dass der Gewichtsanteil an dritter Komponente 15 bis 60%, bezogen auf die Gewichtsmenge an erster Komponente, und das 0,5 bis 0,9-fache des Gewichtsanteils an zweiter Komponente beträgt.

10. Hülle nach einem der Ansprüche 1 bis 4, dadurch gekennzeichnet, dass der Überzug zusätzlich eine dritte Komponente enthält, umfassend ein Gemisch aus nicht reaktivem Siliconöl und pflanzlichem Öl, wobei die Gewichtsmenge an Siliconöl bzw. pflanzlichem Öl im Überzug jeweils kleiner ist als die Gewichtsmenge an erster Komponente und jeweils grösser ist als die Gewichtsmenge an zweiter Komponente.

11. Hülle nach Anspruch 10, dadurch gekennzeichnet, dass die Gewichtsmenge an Siliconöl im Überzug 15 bis 60% und die Gewichtsmenge an pflanzlichem Öl im Überzug 15 bis 80%, bezogen jeweils auf die Gewichtsmenge an erster Komponente, beträgt.

12. Hülle nach Anspruch 10 oder 11, dadurch gekennzeichnet, dass die Gewichtsmenge an Siliconöl im Überzug bis zum 5-fachen und die Gewichtsmenge an pflanzlichem Öl bis zum 10-fachen der Gewichtsmenge an zweiter Komponente beträgt.

13. Hülle nach einem der Ansprüche 6 bis 12, dadurch gekennzeichnet, dass der Überzug ein Flächengewicht von 0,2 bis 3, vorzugsweise 0,3 bis 1,0 g/m$^2$ aufweist.

14. Hülle nach einem der Ansprüche 1 bis 13, dadurch gekennzeichnet, dass sie eine Faserverstärkung aufweist und einen mittleren oder grossen Durchmesser besitzt.

15. Hülle nach einem der Ansprüche 1 bis 13, dadurch gekennzeichnet, dass sie gekrümmte oder ringförmige Gestalt hat.

16. Verfahren zur Herstellung der schlauchförmigen Nahrungsmittelhülle, insbesondere Wursthülle, nach Anspruch 1, wobei man den Überzug aus den beiden Komponenten auf die innere Oberfläche der Hülle aufbringt, dadurch gekennzeichnet, dass die wässrige Überzugsmischung 1 bis 20, insbesondere 3 bis 6 Gew.-% des wasserlöslichen Cellulose- und/oder Stärkeäthers als erste Komponente und 0,2 bis 10, insbesondere 0,5 bis 5 Gew.-% dispergiertes Wachs als zweite Komponente enthält, wobei der Gewichtsanteil an zweiter Komponente geringer ist als der Gewichtsanteil an erster Komponente, insbesondere geringer ist als die Hälfte des Gewichtsanteils an erster Komponente.

17. Verfahren nach Anspruch 16, dadurch gekennzeichnet, dass die Überzugsmischung als dritte Komponente ein nicht reaktives Siliconöl enthält, wobei dessen Gewichtsanteil in der Überzugsmischung kleiner ist als der Gewichtsanteil der ersten Komponente und gleich oder grösser ist als der Gewichtsanteil der zweiten Komponente.

18. Verfahren nach Anspruch 17, dadurch gekennzeichnet, dass in der Überzugsmischung der Gewichtsanteil an Siliconöl 15 bis 60%, bezogen auf die Gewichtsmenge an erster Komponente, und bis zum 5-fachen des Gewichtsanteils an zweiter Komponente beträgt.

19. Verfahren nach Anspruch 16, dadurch gekennzeichnet, dass die Überzugsmischung als dritte Komponente ein pflanzliches Öl enthält, dessen Gewichtsanteil in der Überzugsmischung kleiner ist als der jeweilige Gewichtsanteil der ersten und zweiten Komponente.

20. Verfahren nach Anspruch 19, dadurch gekennzeichnet, dass der Gewichtsanteil der dritten Komponente 15 bis 60%, bezogen auf die Gewichtsmenge an erster Komponente, und das 0,5 bis 0,9-fache des Gewichtsanteils an zweiter Komponente beträgt.

21. Verfahren nach Anspruch 16, dadurch gekennzeichnet, dass die Überzugsmischung als dritte Komponente ein Gemisch aus nicht reaktivem Siliconöl und pflanzlichem Öl enthält, wobei dessen jeweiliger Gewichtsanteil in der Überzugsmischung jeweils kleiner ist als die Gewichtsmenge der ersten Komponente und jeweils grösser ist als die Gewichtsmenge der zweiten Komponente.

22. Verfahren nach Anspruch 21, dadurch gekennzeichnet, dass in der Überzugsmischung die Gewichtsmenge an Siliconöl 15 bis 60% und die Gewichtsmenge an pflanzlichem Öl 15 bis 80%, bezogen jeweils auf die Gewichtsmenge an erster Komponente, beträgt.

23. Verwendung der Nahrungsmittelhülle nach Anspruch 14 zur Herstellung von Würsten mit mittleren oder grossem Durchmesser vom Blutwurst- oder Brühwurst-Typ.

24. Verwendung der Nahrungsmittelhülle nach Anspruch 15 zur Herstellun gekrümmter oder ringförmiger Rohwürste, insbesondere Mettwurst.

## Claims

1. Tubular food casing, in particular sausage casing, based on cellulose and carrying a coating on its inside surface, in order to improve the ease of peeling of the casing from the filling, in particular from the sausage mixture contained therein, said coating comprising a homogeneous mixture of at least two components, the first component being a water-soluble cellulose ether and/or starch ether and the second component being a wax, characterised in that in the coating the weight amount of the second component is smaller than half the weight amount of the first component.

2. Casing as claimed in Claim 1, wherein the second component is comprised of a wax having functional groups, the main constituent of which is a mixture of esters of linear aliphatic alcohols and linear higher molecular-weight fatty acids, the fatty acids preferably having chain lengths of between 18 and 34 carbon atoms.

3. Casing as claimed in Claim 2, wherein the second component is selected from the group comprising waxes based on montan wax, candelilla wax, carnauba wax or beeswax.

4. Casing as claimed in Claim 2 or 3, wherein the second component is comprised of chemically modified montan wax.

5. Casing as claimed in any of Claims 1 to 4, wherein the weight ratio of the first to the second component is higher than 2:1, and is up to 20:1.

6. Casing as claimed in any of Claims 1 to 4, wherein the coating additionally contains a third component, comprising a non-reactive silicone oil, which is present in the coating in a weight amount smaller than the weight amount of the first component and equal to or higher than the weight amount of the second component.

7. Casing as claimed in Claim 6, wherein the weight amount of silicone oil is 15 to 60%, relative to the weight amount of the first component, and up to the 5-fold of the weight amount of the second component.

8. Casing as claimed in any of Claims 1 to 4, wherein the coating additionally contains a third component comprising a vegetable oil, the weight amount of which is smaller than the respective weight amounts of the first and the second components.

9. Casing as claimed in Claim 8, wherein the weight amount of the third component is 15 to 60%, relative to the weight of the first component, and the 0.5-fold to the 0.9-fold of the weight amount of the second component.

10. Casing as claimed in any one of Claims 1 to 4, wherein the coating additionally contains a third component comprising a mixture of non-reactive silicone oil and vegetable oil, whereby the weight amount of silicone oil or vegetable oil, respectively, contained in the coating is in each case smaller than the weight amount of the first component and higher than the weight amount of the second component.

11. Casing as claimed in Claim 10, wherein the weight amount of silicone oil contained in the coating is 15 to 60% and the weight amount of vegetable oil contained in the coating is 15 to 80%, each time related to the weight amount of the first component.

12. Casing as claimed in Claim 10 or 11, wherein the weight amount of silicone oil contained in the coating is up to the 5-fold and the weight amount of the vegetable oil is up to the 10-fold of the weight of the second component.

13. Casing as claimed in any of Claims 6 to 12, wherein the coating has a weight per unit area of 0.2 to 3 g/m$^2$, preferably of 0.3 to 1.0 g/m$^2$.

14. Casing as claimed in any of Claims 1 to 13, which possesses a fiber reinforcement and has a medium or large diameter.

15. Casing as claimed in any of Claims 1 to 13, which has a curved or ring-like shape.

16. Process for the production of the tubular food casing, in particular sausage casing, as claimed in Claim 1, in which the two-component coating is applied to the inside surface of the casing, characterized in that the aqueous coating composition contains between 1 and 20% by weight, in particular between 3 and 6% by weight, of the water-soluble cellulose and/or starch ether as the first component and between 0.2 and 10% by weight, in particular between 0.5 and 5% by weight of dispersed wax as the second component, the weight amount of the second component being smaller than the weight amount of the first component, in particular smaller than half the weight amount of the first component.

17. Process as claimed in Claim 16, wherein the coating composition contains a non-reactive silicone oil as the third component, the weight amount of which in the coating composition is smaller than the weight amount of the first component and equal to or greater than the weight amount of the second component.

18. Process as claimed in Claim 17, wherein the weight amount of silicone oil contained in the coating is 15 to 60%, relative to the weight amount of the first component, and up to the 5-fold of the weight amount of the second component.

19. Process as claimed in Claim 16, wherein the coating composition contains a vegetable oil as the third component, the weight amount of which contained in the coating composition is smaller than the respective weight amounts of the first and the second components.

20. Process as claimed in Claim 19, wherein the weight amount of the third component is 15 to 60%, relative to the weight of the first component, and the 0.5-fold to the 0.9-fold of the weight amount of the second component.

21. Process as claimed in Claim 16, wherein the coating composition contains, as the third component, a mixture of a non-reactive silicone oil and a vegetable oil, the respective weight amount of which in the coating compositon is in each case smaller than the weight amount of the first component and higher than the weight amount of the second component.

22. Process as claimed in Claim 21, wherein in the coating composition the weight amount of silicone oil is 15 to 60% and the weight amount of vegetable oil is 15 to 80%, each time related to the weight amount of the first component.

23. Use of the food casing as claimed in Claim 14, for producing sausages of medium or large diameter, of the blood sausage or cooked sausage type.

24. Use of the food casing as claimed in Claim 15, for producing curved or ring-shaped uncooked sausages, in particular spreadable uncooked pork sausage.

**Revendications**

1. Enveloppe pour aliments tubulaire, en particulier enveloppe pour saucisses, à base de cellulose, portant sur sa surface interne un revêtement pour améliorer l'aptitude à la séparation par pelage de l'enveloppe et de la matière de remplissage, en particulier de la chair saucisse, comprenant un mélange homogène d'au moins deux constituants, le premier constituant consistant en un éther de cellulose et/ou un éther d'amidon soluble dans l'eau et le deuxième constituant consistant en une cire, caractérisée en ce que la quantité en poids de deuxième constituant dans le revêtement est inférieure à la moitié de la quantité en poids de premier constituant.

2. Enveloppe selon la revendication 1, caractérisée en ce que le deuxième constituant comprend une cire à groupes fonctionnels, dont le constituant principal consiste en un mélange d'esters d'alcools aliphatiques linéaires et d'acides gras supérieurs linéaires les longueurs de chaîne des acides gras étant de préférence comprises entre 18 et 34 atomes de C.

3. Enveloppe selon la revendication 2, caractérisée en ce que le deuxième constituant est choisi dans le groupe des cires à base de cire de liquide, cire de candelilla, cire de carnauba ou cire d'abeilles.

4. Enveloppe selon la revendication 2 ou 3, caractérisée en ce que le deuxième constituant comprend de la cire de liquide modifiée chimiquement.

5. Enveloppe selon l'une quelconque des revendications 1 à 4, caractérisée en ce que le rapport en poids du premier au deuxième constituant dans le revêtement est supérieur à 2:1 et va jusqu'à 20:1.

6. Enveloppe selon l'une quelconque des revendications 1 à 4, caractérisée en ce que le revêtement contient en plus un troisième constituant comprenant une huile de silicone non réactive, dont la quantité en poids dans le revêtement est inférieure à la quantité en poids de premier constituant et égale ou supérieure à la quantité en poids de deuxième constituant.

7. Enveloppe selon la revendication 6, caractérisée en ce que la quantité en poids d'huile de silicone est de 15 à 60% par rapport à la quantité en poids de premier constituant et va jusqu'à 5 fois la quantité en poids de deuxième constituant.

8. Enveloppe selon l'une quelconque des revendications 1 à 4, caractérisée en ce que le revêtement contient en outre un troisième constituant comprenant une huile végétale, dont la quantité en poids est inférieure aux quantités en poids respectives de premier et de deuxième constituants.

9. Enveloppe selon la revendication 8, caractérisée en ce que la quantité en poids de troisième constituant est de 15 à 60% par rapport à la quantité en poids de premier constituant et est égale à 0,5 à 0,9 fois la quantité en poids de deuxième constituant.

10. Enveloppe selon l'une quelconque des revendications 1 à 4, caractérisée en ce que le revêtement contient en outre un troisième constituant comprenant un mélange d'huile de silicone non réactive et d'huile végétale, la quantité en poids d'huile de silicone ou d'huile végétale dans le revêtement étant dans chaque cas inférieure à la quantité en poids de premier constituant et supérieure à la quantité en poids de deuxième constituant.

11. Enveloppe selon la revendication 10, caractérisée en ce que la quantité en poids d'huile de silicone dans le revêtement est de 15 à 60% et la quantité en poids d'huile végétale dans le revêtement est de 15 à 80%, par rapport à la quantité en poids de premier constituant.

12. Enveloppe selon la revendication 10 ou 11, caractérisée en ce que la quantité en poids d'huile de silicone dans le revêtement va jusqu'à 5 fois et la quantité en poids d'huile végétale va jusqu'à 10 fois la quantité en poids de deuxième constituant.

13. Enveloppe selon l'une quelconque des revendications 6 à 12, caractérisée en ce que le revêtement présente un poids surfacique de 0,2 à 3 g/m², de préférence de 0,3 à 1,0 g/m².

14. Enveloppe selon l'une quelconque des revendications 1 à 13, caractérisée en ce qu'elle présente un renforcement par des fibres et qu'elle possède un diamètre moyen ou grand.

15. Enveloppe selon l'une quelconque des revendications 1 à 13, caractérisée en ce qu'elle a une forme courbe ou annulaire.

16. Procédé de fabrication d'une enveloppe pour aliments tubulaire, en particulier d'une enveloppe pour saucisses, selon la revendication 1, dans lequel on applique le revêtement formé des deux constituants sur la surface interne de l'enveloppe, caractérisé en ce que le mélange de revêtement aqueux contient 1 à 20, en particulier 3 à 6% en poids de l'éther de cellulose et/ou d'amidon soluble dans l'eau comme premier constituant et 0,2 à 10, en particulier 0,5 à 5% en poids de cire dispersée comme deuxième constituant, la quantité en poids de deuxième constituant étant inférieure à la quantité en poids de premier constituant, en particulier inférieure à la moitié de la quantité en poids de premier constituant.

17. Procédé selon la revendication 16, caractérisé en ce que le mélange de revêtement contient comme troisième constituant une huile de silicone non réactive, la quantité en poids de celle-ci dans le mélange de revêtement étant inférieure à la quantité en poids de premier constituant et étant supérieure ou égale à la quantité en poids de deuxième constituant.

18. Procédé selon la revendication 17, caractérisé en ce que la quantité en poids d'huile de silicone dans le revêtement est de 15 à 60% par rapport à la quantité en poids de premier constituant et va jusqu'à 5 fois la quantité en poids de deuxième constituant.

19. Procédé selon la revendication 16, caractérisé en ce que le mélange de revêtement contient comme troisième constituant une huile végétale, la quantité en poids de celle-ci dans le mélange de revêtement étant inférieure à la quantité en poids de premier et de deuxième constituant respectivement.

20. Procédé selon la revendication 19, caractérisé en ce que la quantité en poids de troisième constituant est de 15 à 60% par rapport à la quantité en poids de premier constituant et est égale à 0,5 à 0,9 fois la quantité en poids de deuxième constituant.

21. Procédé selon la revendication 16, caractérisé en ce que le mélange de revêtement contient comme troisième constituant un mélange d'huile de silicone non réactive et d'huile végétale, la quantité en poids de chacune dans le mélange de revêtement étant inférieure à la quantité en poids de premier constituant et supérieure à la quantité en poids de deuxième constituant.

22. Procédé selon la revendication 21, caractérisé en ce que la quantité en poids d'huile de silicone dans le mélange de revêtement est de 15 à 60% et la quantité en poids d'huile végétale est de 15 à 80% par rapport à la quantité en poids de premier constituant.

23. Emploi de l'enveloppe pour aliments selon la revendication 14 pour la fabrication de saucisses de diamètre moyen ou grand du type boudin ou saucisse cuite.

24. Emploi de l'enveloppe pour aliments selon la revendication 15 pour la fabrication de saucisses crues courbes ou annulaires, en particulier saucisses de viande.